(19) **Europäisches Patentamt**

**European Patent Office**

**Office européen des brevets**

(11) **EP 1 634 919 A1**

(12) **EUROPEAN PATENT APPLICATION**

(43) Date of publication:
15.03.2006 Bulletin 2006/11

(51) Int Cl.:
*C08L 21/00* (2006.01) *C08L 23/14* (2006.01)

(21) Application number: 05108113.1

(22) Date of filing: 05.09.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 09.09.2004 US 938369

(71) Applicant: Advanced Elastomer Systems, L.P. Akron,
Ohio 44311-1065 (US)

(72) Inventors:
• Ellul, Maria D.
44224, Silver Lake Village (US)
• Arjunan, Palanisamy
77059, Houston (US)

(74) Representative: von Kreisler Selting Werner
Patentanwälte
Deichmannhaus am Dom
Bahnhofsvorplatz 1
50667 Köln (DE)

(54) **Improved thermoplastic vulcanizates**

(57) A composition comprising a dynamically-vulcanized rubber, and a copolymer of propylene and at least one of (i) an $\alpha$, internal non-conjugated diene monomer and (ii) an olefin containing a labile hydrogen, where the copolymer includes from about 0.1 to about 10 mole percent by weight units deriving from $\alpha$, internal non-conjugated diene monomer or from about 0.5 to about 10 mole percent units deriving from an olefin containing a labile hydrogen, and where the compositional distribution of the $\alpha$, internal non-conjugated diene monomer or the olefin containing a labile hydrogen is narrow as determined by a crystallization temperature distribution parameter R that is less than 2.0.

EP 1 634 919 A1

**Description**

**FIELD OF THE INVENTION**

This invention is directed toward improved thermoplastic vulcanizates resulting from dynamic cure employing a peroxide curative.

**BACKGROUND OF THE INVENTION**

Thermoplastic elastomers are known. They have many of the properties of thermoset elastomers, yet they are processable as thermoplastics. One type of thermoplastic elastomer is a thermoplastic vulcanizate, which may be characterized by finely-divided rubber particles dispersed within a plastic matrix. These rubber particles are crosslinked to promote elasticity.

Thermoplastic vulcanizates may advantageously be produced by employing a peroxide cure system. Thermoplastic vulcanizates that are dynamically vulcanized with peroxide cure systems advantageously are non-hygroscopic, halide-free, lighter in color, thermally stable, and contain less residues.

One shortcoming associated with the use of a peroxide cure system is the deleterious impact on the thermoplastic polymers within the thermoplastic vulcanizates. Namely, the peroxide curatives are believed to degrade the thermoplastics (e.g., polypropylene) via chain scission. As a result, thermoplastic vulcanizates that are fully cured by peroxide cure systems typically are characterized by lower ultimate tensile strength, lower elongation at break, and lower melt strength.

The prior art has attempted to overcome these shortcomings. For example, U.S. Pat. No. 4,985,502 teaches the use of less peroxide curative. Unfortunately, however, the use of a limited amount of peroxide precludes the ability to fully cure the rubber and engineering properties are sacrificed.

Also, U.S. Pat. No. 5,656,693 attempts to alleviate the problem of polypropylene degradation, and yet achieve a full cure of the rubber, by employing a rubber terpolymer that includes vinyl norbornene as a polymeric unit. These rubbers are more efficiently curable with peroxides and therefore the amount of peroxide required to achieve a full cure is reduced, which thereby reduces the impact on the polypropylene.

EP 486 293 teaches thermoplastic vulcanizates that employ polypropylene copolymers that are modified with non-conjugated dienes such as 7-methyl-1,6-octadiene in order to improve moldability, rigidity, and impact strength. The modified polypropylene copolymers are prepared by Ziegler-Natta catalyst systems and therefore the modified polymers have the dienes localized in the low molecular weight fractions resulting in broad compositional distributions. These modified polymers are also heterogeneous, which results in characteristics similar to blends of isotactic polypropylene with low molecular weight diene/propylene copolymers. Notably, the melting temperature of these polymers is relatively high.

Because it would be advantageous to fully realize the benefits associated with peroxide cured thermoplastic vulcanizates, there is a need to overcome the shortcomings associated with the use of peroxide cure systems.

**SUMMARY OF THE INVENTION**

In general the present invention provides a composition comprising a dynamically-vulcanized rubber, and a copolymer of propylene and at least one of (i) an α, internal non-conjugated diene monomer and (ii) an olefin containing a labile hydrogen, where the copolymer includes from about 0.1 to about 10 mole percent by weight units deriving from α, internal non-conjugated diene monomer or from about 0.5 to about 10 mole percent units deriving from an olefin containing a labile hydrogen, and where the compositional distribution of the α, internal non-conjugated diene monomer or the olefin containing a labile hydrogen is narrow as determined by a crystallization temperature distribution parameter R that is less than 2.0.

The present invention also includes a composition comprising a dynamically-vulcanized rubber, and a copolymer of propylene and at least one of (i) an α, internal non-conjugated diene monomer and (ii) an olefin containing a labile hydrogen, where the copolymer includes from about 0.1 to about 10 mole percent by weight units deriving from α, internal non-conjugated diene monomer or from about 0.5 to about 10 mole percent units deriving from an olefin containing a labile hydrogen, and where the compositional distribution of the α, internal non-conjugated diene monomer or the olefin containing a labile hydrogen is narrow as determined by a crystallization temperature distribution parameter R that is less than 2.0.

The present invention further comprises a method for preparing a thermoplastic vulcanizate, the method comprising the step of dynamically vulcanizing a rubber within a mixture that includes the rubber and from about 20 to about 200 parts by weight of a propylene copolymer per 100 parts by weight rubber, where said step of dynamically vulcanizing is carried out by using a peroxide curative, and where the copolymer is prepared by copolymerizing propylene monomer with at least one of about 0.1 to about 10 mole percent of an α, internal non-conjugated diene monomer or about 0.5 to about 10 mole percent of an olefin containing a labile hydrogen in the presence of a single-site catalyst.

## DETAILED DESCRIPTION OF ILLUSTRATIVE EMBODIMENTS

The thermoplastic vulcanizates of this invention include a blend of a cured rubber and a propylene copolymer. In one embodiment, the propylene copolymer derives from the copolymerization of monomers including (i) propylene, (ii) an α, internal non-conjugated diene monomer, (iii) optionally an α,ω non-conjugated monomer, and (iv) optionally ethylene. In another embodiment, the propylene copolymer derives from the copolymerization of monomers including (i) propylene, (ii) an olefin containing a labile hydrogen, and (ii) optionally ethylene. Additional comonomers may also be included to further alter properties as may be desired, although the preferred propylene copolymers are preferably devoid or substantially devoid of polymeric units derived from conjugated dienes.

Any rubber or mixture thereof that is capable of being crosslinked or cured with peroxide can be used as the rubber component. Reference to a rubber may include mixtures of more than one rubber. Some non-limiting examples of these rubbers include elastomeric olefinic copolymers, natural rubber, styrenebutadiene copolymer rubber, butadiene rubber, acrylonitrile rubber, butadienestyrene-vinyl pyridine rubber, urethane rubber, polyisoprene rubber, epichlorohydrin terpolymer rubber, and polychloroprene.

The term elastomeric olefinic copolymer refers to rubbery copolymers polymerized from ethylene, at least one α-olefin monomer, and optionally at least one diene monomer. The α-olefins may include, but are not limited to, propylene, 1-butene, 1-hexene, 4-methyl-1 pentene, 1-octene, 1-decene, or combinations thereof. The preferred α-olefins are propylene, 1-hexene, 1-octene or combinations thereof. The diene monomers may include, but are not limited to, 5-ethylidene-2-norbornene; 1,4-hexadiene; 5-methylene-2-norbornene; 1,6-octadiene; 5-methyl-1,4-hexadiene; 3,7-dimethyl-1,6-octadiene; 1,3-cyclopentadiene; 1,4-cyclohexadiene; dicyclopentadiene; 5-vinyl-2-norbornene, divinylbenzene, or a combination thereof. The preferred diene monomers are 5-ethylidene-2-norbornene, 5-vinyl-2-norbornene, 5-methylene-2-norbornene and divinylbenzene. In the event that the copolymer is prepared from ethylene, α-olefin, and diene monomers, the copolymer may be referred to as a terpolymer or even a tetrapolymer in the event that multiple α-olefins or dienes are used.

The preferred olefinic elastomeric copolymers include from about 15 to about 85% by weight, more preferably from about 55 to about 75% by weight, still more preferably from about 60 to about 70% by weight, and even more preferably from about 61 to about 66% by weight ethylene units deriving from ethylene monomer, and from about 0.1 to about 15% by weight, more preferably from about 0.5 to about 12% by weight, still more preferably from about 1 to about 10% by weight, and even more preferably from about 2 to about 8% by weight diene units deriving from diene monomer, with the balance including α-olefin units (preferably propylene) deriving from α-olefin monomer. Expressed in mole percent, the preferred terpolymer preferably includes from about 0.1 to about 5 mole percent, more preferably from about 0.5 to about 4 mole percent, and even more preferably from about 1 to about 2.5 mole percent diene units deriving from diene monomer.

In one embodiment, the elastomeric copolymer is a terpolymer of ethylene, at least one α-olefin monomer, and 5-vinyl-2-norbornene. This terpolymer is advantageous when a peroxide curative is employed as described in U.S. Pat. No. 5,656,693, which is incorporated herein by reference. The terpolymer preferably includes from about 40 to about 90 mole percent of its polymeric units deriving from ethylene, and from about 0.2 to about 5 mole percent of its polymeric units deriving from vinyl norbornene, based on the total moles of the terpolymer, with the balance comprising units deriving from α-olefin monomer. Other useful olefinic elastomeric copolymers are disclosed in U.S. Patent Nos. 6,268,438, 6,288,171, and 6,245,856.

The preferred olefinic elastomeric copolymers have a weight average molecular weight ($M_w$) that is preferably greater than 50,000, more preferably greater than 100,000, even more preferably greater than 200,000, and still more preferably greater than 300,000; and the weight average molecular weight of the preferred olefinic elastomeric copolymers is preferably less than 1,200,000, more preferably less than 1,000,000, still more preferably less than 900,000, and even more preferably less than 800,000. The preferred olefinic elastomeric copolymers have a number average molecular weight ($M_n$) that is preferably greater than 20,000, more preferably greater than 60,000, even more preferably greater than 100,000, and still more preferably greater than 150,000; and the number average molecular weight of the preferred olefinic elastomeric copolymers is preferably less than 500,000, more preferably less than 400,000, still more preferably less than 300,000, and even more preferably less than 250,000.

The preferred olefinic elastomeric copolymers may also be characterized by having a Mooney viscosity ($ML_{(1+4)}$ at 125°C) per ASTM D 1646, of from about 50 to about 500 and preferably from about 75 to about 450. Where higher molecular weight olefinic elastomeric copolymers are employed within the thermoplastic vulcanizates of this invention, these high molecular weight polymers may be obtained in an oil-extended form. These oil-extended copolymers typically include from about 15 to about 100 parts by weight, per 100 parts by weight rubber, of a paraffinic oil. The Mooney viscosity of these oil-extended copolymers is from about 45 to about 80 and preferably from about 50 to about 70.

Useful olefinic elastomeric copolymers may be manufactured or synthesized by using a variety of techniques. For example, these copolymers can be synthesized by employing solution, slurry, or gas phase polymerization techniques that employ numerous catalyst systems including Ziegler-Natta systems, single-site catalysts, and Brookhart catalysts. Other useful olefinic elastomeric copolymers are disclosed in U.S. Elastomeric copolymers are commercially available under the tradenames Vistalon™ (ExxonMobil Chemical Co.; Houston, Texas), VISTAMAXX™ (ExxonMobil), Keltan™ (DSM Copolymers; Baton Rouge, Louisiana), Nordel™ IP (DuPont Dow Elastomers; Wilmington, Delaware), NORDEL MG™ (DuPont Dow Elastomers), and Buna™ (Bayer Corp.; Germany).

In one embodiment, the propylene copolymers are copolymers of propylene, an $\alpha$, internal non-conjugated diene monomer, optionally ethylene, and optionally an $\alpha$, $\omega$ non-conjugated diene monomer. These copolymers may be referred to as diene-modified propylene copolymers.

The $\alpha$, internal non-conjugated diene monomers may be linear, cyclic, or multicyclic, including fused and non-fused cyclic dienes. Preferably the $\alpha$, internal non-conjugated diene monomers are linear. Also, the $\alpha$, internal non-conjugated diene monomers preferably include $\alpha$, internal non-conjugated dienes in which the internal double bond is a vinylidene group or a tri-substituted unsaturation site. Examples of preferred $\alpha$, internal non-conjugated dienes include 2-methyl-1,5-hexadiene (which has a vinylidene group); 7-methyl-1,6-octadiene (which has a tri-substituted unsaturation site); dicyclopentadiene, vinylnorbornene; ethylidene norbornene; 4-vinylcycloclohexene; and 4-vinyl cyclopentene. In addition to having a cross-linkable double bond (which is preferably non-polymerizable) pendent to the polymer backbone, several of the $\alpha$, internal non-conjugated diene monomers will advantageously provide the copolymers with a labile hydrogen atom pendent to the polymer backbone.

The $\alpha$, $\omega$ non-conjugated diene monomers may also be linear, cyclic, and/or multicyclic, including fused and non-fused cyclic dienes. Examples of $\alpha$, $\omega$ dienes include 1,7-octadiene, 1,9-decadiene, 1,13-tetradecadiene, 1,8-nonadiene, 1,10-undecadiene, 1,11-dodecadiene, 3-propenyl styrene, 1,15-hexadecadiene, 1,17-octadecadiene, norbornadiene, 4-butenyl styrene, and divinylbenzene.

The propylene copolymers of this embodiment typically include from about 90 to about 99.9 mole percent units deriving from propylene, from about 0.1 to about 10 mole percent units deriving from $\alpha$, internal non-conjugated diene monomer, from about 0 to about 3.0 mole percent units deriving from ethylene, and from about 0 to about 2.0 mole percent units deriving from $\alpha$, $\omega$ non-conjugated diene monomer. Preferably, these copolymers include from about 95 to about 99.5 mole percent units deriving from propylene, from about 0.5 to about 1.5 mole percent units deriving from $\alpha$, internal non-conjugated diene monomer, from about 0.0005 to about 1.5 mole percent units deriving from ethylene, and from about 0.001 to about 1.0 mole percent units deriving from $\alpha$, $\omega$ non-conjugated diene monomer. More preferably these copolymers include from about 96 to about 99.25 mole percent units deriving from propylene, from about 0.75 to about 1.2 mole percent units deriving from $\alpha$, internal non-conjugated diene monomer, from about 0.5 to about 1.3 mole percent units deriving from ethylene, and from about 0.1 to about 0.8 mole percent units deriving from $\forall$, T non-conjugated diene monomer.

The propylene copolymers of this embodiment are generally characterized by having a crystallization temperature ($T_c$) of at least 25°C, preferably in excess of 50°C, more preferably in excess of 75°C, even more preferably in excess of 100°C, and still more preferably in excess of 125°C, with the most preferred crystallization temperature ranging from 25°C to 115°C.

The propylene copolymers of this embodiment are generally characterized by having a melting point ($T_m$) of at least 50°C, preferably in excess of 75°C, more preferably in excess of 100°C, even more preferably in excess of 125°C, and still more preferably in excess of 165°C, with the most preferred melting point ranging from 50°C to 165°C. Melting and crystallization temperatures ($T_m$ and $T_c$) can be measured on a DuPont DSC-912 with thin molded film samples scanning at 10°C/min., obtained from the second melt. The term melting point refers to the highest peak among principal and secondary melting peaks as determined by differential scanning calorimetry (DSC).

The propylene copolymers of this embodiment are generally characterized by having a heat of fusion of at least 25 J/g, preferably in excess of 30 J/g, more preferably in excess of 50 J/g, and even more preferably in excess of 70 J/g. Heat of fusion measurements are proportional to the level of crystallinity for the various copolymers as compared to 100% crystalline isotactic polypropylene homopolymer; *See* J.P. Runt, *"Crystallinity Determination,"* ENCYCLOPEDIA OF POLYMER SCI. AND ENGINEERING, 2nd ed., Wiley-Intersciene, Vol. 4, p. 487, (1985). Thus, for example, based on the heat of fusion for a highly crystalline polypropylene homopolymer of 163 J/g, a propylene polymer having a heat of fusion of 82 J/g will have a crystallinity of about 50%.

The propylene copolymers of this embodiment generally have a weight average molecular weight ($M_w$) of about 10,000 to about 2,000,000, preferably from about 30,000 to about 1,000,000, more preferably from about 70,000 to about 750,000, still more preferably form about 100,000 to about 600,000, and still more preferably from about 150,000 to about 400,000. These propylene copolymers are preferably also characterized by having a polydispersity (Mw/Mn) that is less than 5, more preferably less than 3.5, more preferably less than 3, still more preferably less than 2.8, and even more preferably less than 2.5.

The propylene copolymers of this embodiment are generally characterized by having a melt flow rate (MFR) of less than 10, preferably less than 1.5, more preferably less than 1.0, even more preferably less than 0.7, still more preferably less than 0.5, and still more preferably less than 0.3. The melt flow rate is measured in accordance with ASTM D-1238 at 230°C and 2.1 kg load.

The propylene copolymers of this embodiment may also be characterized by a relatively narrow compositional distribution. In other words, the $\forall$, internal non-conjugated diene monomer is distributed relatively evenly throughout the backbone of the copolymer. Several methods can be used to measure the compositional distribution of the comonomer. For example, procedures are described in WO 00/22014 and WO 00/22015, which are incorporated herein by reference. In a preferred embodiment, the compositional distribution of the comonomer is determined based upon the crystallization temperature distribution parameter R. As those skilled in the art appreciate, the breath of the compositional distribution of the comonomer can be discerned from the crystallization temperature distribution parameter R. The crystallization temperature distribution parameter R can be calculated from the number-average crystallization temperature ($T_n$) and the weight-average crystallization temperature ($T_w$). $T_n$ is the number-average crystallization temperature calculated according to the equation $T_n = C_i/(C_i/T_i)$. $T_w$ is the weight-average crystallization temperature calculated according to the equation $T_w = C_i \times T_i/(C_i)$. $C_i$ is the concentration of polymer in solution at the ith data point and Ti is the corresponding temperature at the ith data point in °C. The crystallization temperature distribution parameter R is calculated according to the equation $R = 100 \times (T_w/T_n - 1)$.

In practice, the number-average crystallization temperature ($T_n$) and the weight-average crystallization temperature ($T_w$) can be determined by using a commercial CRYSTAF, model 200 (PolymerChar S.A.) device. In using this device, approximately 20 - 30 mg of polymer can be placed in each reactor and dissolved in 30 ml 1,2 dichlorobenzene (ODCB, Aldrich 99+% stabilized with 0.5g BHT/4L) at 170°C for 60 minutes followed by 45 minutes equilibration time at 100°C. The polymer solutions are then cooled to 30°C using a crystallization rate of 0.2 K/min. A two wavelength infrared detector is then used to measure the polymer concentration during crystallization (3.5 $\mu$m, 2853 cm$^{-1}$ sym. stretch) and to compensate for base line drifts (3.6 $\mu$m) during the analysis time. The solution concentration is monitored at certain temperature intervals, yielding a cumulative concentration curve. The derivative of this curve with respect to temperature represents the weight fraction of crystallized polymer at each temperature.

In a preferred embodiment, the copolymers of this embodiment are characterized by a crystallization temperature distribution parameter R that is preferably less than 2.0, more preferably less than 1.5, even more preferably less than 1.3, more preferably less than 1.0, and still more preferably less than 0.8; also, the copolymers are optionally characterized by a crystallization temperature distribution that is greater than 0.2, optionally greater than 0.3, and optionally greater than 0.4.

In certain sub-embodiments, especially where the copolymers are polymerized from monomer including $\alpha$, $\omega$ non-conjugated diene monomers, the copolymers are highly branched. Preferably, these copolymers are characterized by having a viscosity average branching index of less than about 1.0, more preferably less than 0.95, even more preferably less than 0.90, and still more preferably less than 0.8.

Those skilled in the art appreciate that the branching index ,gN, at a given molecular weight is determined according to the formula $gN = [\eta]_{branched}/[\eta]_{linear}$, where $[\eta]_{branched}$ is the viscosity of the branched polymer at the given molecular weight slice, $i$, and $[\eta]_{linear}$ is the viscosity of the known linear reference polymer at the given molecular weight slice. And, the average branching index ,<gN>, of the entire polymer can be determined according to the formula $<gN> = [\eta]_{branched}/[0]_{linear}$, where $[\eta]_{branched}$ is the viscosity of the branched polymer, and $[\eta]_{linear}$ is the viscosity of a known linear reference polymer, where the branched and linear polymers have the same molecular weight.

The viscosity average branching index (<gN> $_{vis}$) of the entire polymer may be obtained from the following equation:

$$<g'>_{vis} = \frac{\sum_{i=1}^{N} C_i[\eta]_i}{\sum_{i=1}^{N} C_i[KM_i^{\alpha}]}$$

where $M_i$ is the molecular weight of the polymer, $[\eta]_i$ is the intrinsic viscosity of the branched polymer at molecular weight $M_i$, $C_i$ is the concentration of the polymer at molecular weight $M_i$, and $K$ and $\alpha$ are measured constants from a linear polymer as described by Paul J. Flory at page 310 of PRINCIPLES OF POLYMER CHEMISTRY (1953), and the summation is over all the slices in the distribution. The <gN> vis values are obtained by gel permeation chromatography (GPC) while the polymer is in dilute solution within 1,2,4 trichlorobenzene. The GPC is equipped with triple detectors; differential refractive index (DRI), light scattering and viscosity. The DRI is calibrated with both polystyrene and low molecular weight polyethylene standards, the light scattering detector with a series of polymers of known molecular weight, and the differential viscometer with a series of polymers of known intrinsic viscosities.

Useful propylene copolymers, which include diene-modified propylene copolymers, are described along with their method of preparation in co-pending U.S. Serial No. 60/442,718 and 60/431,088, which are incorporated herein by reference. Specifically, the copolymers of this embodiment are prepared by copolymerizing propylene monomer, ∀, internal non-conjugated diene monomer, optionally ethylene monomer, and optionally α, ω non-conjugated diene monomer in the presence of at least one single-site catalyst that will impart stereoregular propylene crystallinity to the copolymer. The preferred single-site catalyst includes metallocene catalysts.

In one embodiment, the metallocene catalyst includes an alkyl bridged metallocene compound that has at least two indenyl rings or derivatives of indenyl rings, each preferably being substituted at the 4 and/or 7 positions.

In another embodiment, the metallocene catalyst includes an alkyl bridged metallocene compound that has at least two indenyl rings or substituted indenyl rings, each preferably being substituted at the 2 position, and more preferably being substituted at the 2 and 4 positions. The 4-position substitution is preferably an aryl substituent.

In yet another embodiment, the metallocene catalyst includes a substituted or unsubstituted silyl-bridged or ethylene-bridged bis-indenyl metallocene.

Metallocenes are generally represented by the formula $Cp_m MR_n X_q$, where Cp is a cyclopentadienyl ring or derivative thereof, M is a group 4, 5, or 6 transition metal, R is a hydrocarbyl group or hydrocarboxy group having from 1 to 20 carbon atoms, X is a halogen or an alkyl group, and m is an integer from about 1 to about 3, n is an integer from 0 to 3, q is an integer from 0 to 3, and the sum of m, n, and q is equal to the oxidation state of the transition metal. Examples of particularly preferred metallocenes are discussed in U.S. Pat. Nos. 4,530,914; 4,542,199; 4,769,910; 4,808,561; 4,871,705; 4,892,851; 4,933,403; 4,937,299; 5,017,714; 5,057,475; 5,120,867; 5,132,381; 5,155,080; 5,198,401; 5,278,199; 5,304,614; 5,324,800; 5,350,723; 5,391,790; 5,580,939; 5,324,800; 5,599,761; 5,276,208; 5,239,022; 5,243,001; 5,057,475; 5,017,714; 5,120,867; 6,376,410; 6,376,412; 6,380,120; 6,376,409; 6,380,122; and 6,376,413, which are incorporated herein by reference.

Other single-site catalysts include those disclosed in U.S. Patent No. 5,714,556, which is incorporated herein by reference.

In another embodiment, the propylene copolymer is a copolymer of propylene, an olefin having a labile hydrogen, and optionally ethylene. Olefinic monomers containing a labile hydrogen are generally characterized by including one polymerizable group (*e.g.*, double bond) and at least one labile hydrogen. Preferred olefins are α-olefins. Labile hydrogens include those hydrogen atoms that are easily extracted by peroxide. Examples of labile hydrogens include those hydrogens attached to tertiary carbons, hydrogen atoms attached to carbon atoms that are alpha to a double bond (i.e., allylic groups), and hydrogen atoms that are attached to a carbon atom alpha to an aromatic group (i.e., benzylic). Exemplary monomers including labile hydrogens include 4-methyl-pentene-1, 3-methyl-pentene-1, 3-methyl-butene-1, and p-methyl styrene.

The propylene copolymers of this embodiment include from about 90 to about 99.5 mole percent units deriving from propylene, from about 0.5 to about 10 mole percent units deriving from olefinic monomer having a labile hydrogen, and from about 0 to about 3 mole percent units deriving from ethylene. Preferably, the propylene copolymers of this embodiment typically include from about 95 to about 99.0 mole percent units deriving from propylene, from about 1.0 to about 5 mole percent units deriving from olefinic monomer having a labile hydrogen, and from about 0.1 to about 1.5 mole percent units deriving from ethylene. More preferably, the propylene copolymers of this embodiment typically include from about 96 to about 98.5 mole percent units deriving from propylene, from about 1.5 to about 4 mole percent units deriving from olefinic monomer having a labile hydrogen, and from about 0.2 to about 1.0 mole percent units deriving from ethylene.

The copolymers of this embodiment are generally characterized by having a crystallization temperature ($T_c$) of at least 25°C, preferably in excess of 50°C, more preferably in excess of 75°C, even more preferably in excess of 115°C, with the most preferred crystallization temperature ranging from 75°C to 115°C.

The copolymers of this embodiment are generally characterized by having a melting point ($T_m$) of at least 50°C, preferably in excess of 75°C, more preferably in excess of 100°C, even more preferably in excess of 125°C, and still more preferably in excess of 150°C, with the most preferred melting point ranging from 75°C to 150°C.

The copolymers of this embodiment are generally characterized by having a heat of fusion of at least 50 J/g, preferably in excess of 70 J/g, more preferably in excess of 75 J/g, and even more preferably in excess of 100 J/g.

The copolymers of this embodiment generally have a weight average molecular weight ($M_w$) of about 10,000 to about 2,000,000, preferably from about 30,000 to about 1,000,000, more preferably from about 70,000 to about 750,000, still more preferably form about 100,000 to about 600,000, and still more preferably from about 150,000 to about 400,000. These copolymers are preferably also characterized by having a polydispersity (Mw/Mn) that is less than 5, more preferably less than 3.5, more preferably less than 3, still more preferably less than 2.8, and even more preferably less than 2.5.

The copolymers of this embodiment are generally characterized by having a melt flow rate (MFR) of less than 10, preferably less than 5, more preferably less than 1.5, even more preferably less than 1.0, still more preferably less than 0.7, and still more preferably less than 0.3.

The preferred propylene copolymers of this embodiment may also be characterized by a narrow compositional distribution. In other words, the olefin having a labile hydrogen is distributed relatively evenly throughout the backbone of the copolymer. As with the previous embodiment, the narrow compositional distribution can be represented by the crystallization temperature distribution parameter R. In a preferred embodiment, the crystallization temperature distribution parameter R is preferably less than 2.0, more preferably less than 1.5, even more preferably less than 1.3, more preferably less than 1.0, and still more preferably less than 0.8; also, the copolymers are optionally characterized by a crystallization temperature distribution that is greater than 0.2, optionally greater than 0.3, and optionally greater than 0.4.

The copolymers of propylene, olefins having a labile hydrogen atom, and optionally ethylene, along with their method of preparation, are disclosed in U.S. Serial No. 10/738,784, which is incorporated herein by reference. In one embodiment, these copolymers are synthesized by employing a single-site catalyst similar to those described above.

Peroxide curatives are generally selected from organic peroxides. Examples of organic peroxides include, but are not limited to, di-*tert*-butyl peroxide, dicumyl peroxide, t-butylcumyl peroxide, $\alpha,\alpha$-bis(tert-butylperoxy) diisopropyl benzene, 2,5-dimethyl-2,5-di(t-butylperoxy)hexane (DBPH), 1,1-di(*tert*-butylperoxy)-3,3,5-trimethyl cyclohexane, n-butyl-4-4-bis(tert-butylperoxy) valerate, benzoyl peroxide, lauroyl peroxide, dilauroyl peroxide, 2,5-dimethyl-2,5-di (tert-butylperoxy) hexyne-3, and mixtures thereof. Also, diaryl peroxides, ketone peroxides, peroxydicarbonates, peroxyesters, dialkyl peroxides, hydroperoxides, peroxyketals and mixtures thereof may be used.

The peroxide curatives are preferably employed in conjunction with a coagent. Examples of coagents include triallylcyanurate, triallyl isocyanurate, triallyl phosphate, sulfur, N-phenyl bis-maleamide, zinc diacrylate, zinc dimethacrylate, divinyl benzene, 1,2 polybutadiene, trimethylol propane trimethacrylate, tetramethylene glycol diacrylate, trifunctional acrylic ester, dipentaerythritolpentacrylate, polyfunctional acrylate, retarded cyclohexane dimethanol diacrylate ester, polyfunctional methacrylates, acrylate and methacrylate metal salts, oximer for e.g., quinone dioxime. In order to maximize the efficiency of peroxide/coagent crosslinking the mixing and dynamic vulcanization are preferably carried out in a nitrogen atmosphere. Useful peroxides and their methods of use in dynamic vulcanization of thermoplastic vulcanizates are disclosed in U.S. Patent No. 5,656,693, which is incorporated herein by reference.

Plasticizers, extender oils, synthetic processing oils, or a combination thereof may optionally be included, which may be referred to collectively as oils. The oils may include, but are not limited to, aromatic, naphthenic, and paraffinic (including isoparaffinic) extender oils. Exemplary synthetic processing oils are polylinear $\alpha$-olefins, polybranched $\alpha$-olefins, and hydrogenated polyalphaolefins. The compositions of this invention may include organic esters, alkyl ethers, or combinations thereof. U.S. Patent No. 5,290,886 and 5,397,832 are incorporated herein in this regard. The addition of certain low to medium molecular weight organic esters and alkyl ether esters to the compositions of the invention dramatically lowers the Tg of the polyolefin and rubber components, and of the overall composition, and improves the low temperatures properties, particularly flexibility and strength. These organic esters and alkyl ether esters generally have a molecular weight that is generally less than about 10,000. It is believed that the improved effects are achieved by the partitioning of the ester into both the polyolefin and rubber components of the compositions. Particularly suitable esters include monomeric and oligomeric materials having an average molecular weight below about 2000, and preferably below about 600. The ester should be compatible, or miscible, with both the polyolefin and rubber components of the composition; i.e. that it mix with the other components to form a single phase. The esters found to be most suitable were either aliphatic mono- or diesters or alternatively oligomeric aliphatic esters or alkyl ether esters. Polymeric aliphatic esters and aromatic esters were found to be significantly less effective, and phosphate esters were for the most part ineffective. Synthetic polyalphaolefins or isoparaffins are also useful in lowering Tg.

In addition to the propylene copolymer, the thermoplastic elastomers of this invention may optionally include other thermoplastic resins such as those that are conventionally used in the preparation of thermoplastic elastomers. In the broadest sense, these conventional thermoplastic resins include those thermoplastic resins that are not the propylene copolymers disclosed above (i.e., those including $\alpha$, internal non-conjugated diene monomer or olefins containing a labile hydrogen). These thermoplastics include a solid, generally high molecular weight plastic material.

These thermoplastic resins preferably have a weight average molecular weight from about 200,000 to about 2,000,000, and a number average molecular weight from about 80,000 to about 800,000. More preferably, these resins have a weight average molecular weight from about 300,000 to about 600,000, and a number average molecular weight from about 90,000 to about 150,000.

Preferably, the linear thermoplastic resins have a melt flow rate that is less than about 10 dg/min, preferably less than about 2 dg/min, still more preferably less than about 1.0 dg/min, and even more preferably less than about 0.5 dg/min.

These thermoplastic resins also preferably have a melt temperature ($T_m$) that is from about 150 to about 175°C, more preferably from about 155 to about 170°C, and even more preferably from about 160 to about 170°C. The glass transition temperature (Tg) of these resins is preferably from about -5 to about 10°C, more preferably from about -3 to about 5°C, and even more preferably from about 0 to about 2°C. The crystallization temperature ($T_c$) of these resins is preferably at least about 75°C, more preferably at least about 95°C, even more preferably at least about 100°C, and still more preferably at least 105°C, with the preferred crystallization temperature ranging from 105° to 110°C.

Also, these thermoplastic resins are preferably characterized by having a heat of fusion of at least 25 J/g, preferably in excess of 30 J/g, more preferably in excess of 50 J/g, and even more preferably in excess of 70 J/g.

Exemplary thermoplastic resins include crystalline and crystallizable polyolefins, polyimides, polyesters (nylons), and fluorine-containing thermoplastics. Also, the thermoplastic resins may include copolymers of polyolefins with styrene such as styrene-ethylene copolymer. The preferred thermoplastic resins are crystallizable polyolefins that are formed by polymerizing ethylene or $\alpha$-olefins such as propylene, 1-butene, 1-hexene, 1-octene, 2-methyl-1-propene, 3-methyl-1-pentene, 4-methyl-1-pentene, 5-methyl-1-hexene, and mixtures thereof. Copolymers of ethylene and propylene or ethylene or propylene with another $\alpha$-olefin such as 1-butene, 1-hexene, 1-octene, 2-methyl-1-propene, 3-methyl-1-pentene, 4-methyl-1-pentene, 5-methyl-1-hexene or mixtures thereof is also contemplated. Specifically included are the reactor, impact, and random copolymers of propylene with ethylene or the higher $\alpha$-olefins, described above, or with $C_{10}$-$C_{20}$ diolefins. Comonomer contents for these propylene copolymers will typically be from 1 to about 30% by weight of the polymer, for example, *See* U.S. Patent Nos. 6,268,438, 6,288,171, and 6,245,856. Blends or mixtures of 2 or more polyolefin thermoplastics such as described herein, or with other polymeric modifiers, are also suitable in accordance with this invention. These homopolymers and copolymers may be synthesized by using an appropriate polymerization technique known in the art such as, but not limited to, the conventional Ziegler-Natta type polymerizations, and catalysis employing single-site organometallic catalysts including, but not limited to, metallocene catalysts.

An especially preferred thermoplastic resin is a high-crystallinity isotactic or syndiotactic polypropylene. This polypropylene generally has a density of from about 0.85 to about 0.91 g/cc, with the largely isotactic polypropylene having a density of from about 0.90 to about 0.91 g/cc. Also, high and ultra-high molecular weight polypropylene that has a fractional melt flow rate is highly preferred. These polypropylene resins are characterized by a melt flow rate that is less than or equal to 10 dg/min, more preferably less than or equal to 1.0 dg/min, and even more preferably less than or equal to 0.5 dg/min per ASTM D-1238.

In certain embodiments of this invention, a polymeric processing additive may be added. The processing additive may be a polymeric resin that has a very high melt flow index. These polymeric resins include both linear and branched molecules that have a melt flow rate that is greater than about 500 dg/min, more preferably greater than about 750 dg/min, even more preferably greater than about 1000 dg/min, still more preferably greater than about 1200 dg/min, and still more preferably greater than about 1500 dg/min. The thermoplastic elastomers of the present invention may include mixtures of various branched or various linear polymeric processing additives, as well as mixtures of both linear and branched polymeric processing additives. Reference to polymeric processing additives will include both linear and branched additives unless otherwise specified. The preferred linear polymeric processing additives are polypropylene homopolymers. The preferred branched polymeric processing additives include diene-modified polypropylene polymers. Thermoplastic vulcanizates that include similar processing additives are disclosed in U.S. Patent No. 6,451,915, which is incorporated herein by reference.

In addition to the thermoplastic resins, rubber, curatives and optional extender oils, the compositions of the invention may also include reinforcing and non-reinforcing fillers, antioxidants, stabilizers, rubber processing oil, lubricants, antiblocking agents, anti-static agents, waxes, foaming agents, pigments, flame retardants and other processing aids known in the rubber compounding art. These additives can comprise up to about 50 weight percent of the total composition. Fillers and extenders that can be utilized include conventional inorganics such as calcium carbonate, clays, silica, talc, titanium dioxide, carbon black and the like.

Preferably, compositions of this invention will contain a sufficient amount of the rubber to form rubbery compositions of matter. The skilled artisan will understand that rubbery compositions of matter are those that have ultimate elongations greater than 100 percent, and that quickly retract to 150 percent or less of their original length within about 10 minutes after being stretched to 200 percent of their original length and held at 200 percent of their original length for about 10 minutes.

Accordingly, the thermoplastic elastomers of the present invention should comprise at least about 25 percent by weight, preferably at least about 35 percent by weight, even more preferably at least about 45 percent by weight, and still more preferably at least about 50 percent by weight rubber. More specifically, the amount of rubber within the thermoplastic vulcanizate is generally from about 15 to about 90 percent by weight, preferably from about 45 to about 85 percent by weight, and more preferably from about 60 to about 80 percent by weight, based on the entire weight of the rubber and thermoplastic component combined, where the thermoplastic component includes the propylene copolymer and any other thermoplastic materials included within the thermoplastic elastomer.

The thermoplastic elastomers generally include from about 15 to about 300 parts by weight, preferably from about 30 to about 150 parts by weight, and more preferably from about 40 to about 75 parts by weight of the propylene copolymer per 100 parts by weight rubber.

The skilled artisan will be able to readily determine a sufficient or effective amount of vulcanizing agent to be employed without undue calculation or experimentation. The amount of vulcanizing agent should be sufficient to at least partially vulcanize the rubber. Preferably, the rubber is completely vulcanized.

Preferably, a vulcanizing amount of curative preferably comprises from about $1 \times 10^{-5}$ moles to about $1 \times 10^{-1}$ moles, more preferably from about $1 \times 10^{-4}$ moles to about $9 \times 10^{-2}$ moles, and even more preferably from about $1 \times 10^{-2}$ moles to about $4 \times 10^{-2}$ moles per 100 parts by weight rubber. The amount may also be expressed as a weight per 100 parts by weight rubber. This amount, however, may vary depending on the curative employed. For example, where 4,4-bis(tert-butyl peroxy) diisopropyl benzene is employed, the amount employed may include from about 0.5 to about 12 and preferably from about 1 to about 6 parts by weight per 100 parts by weight rubber.

The skilled artisan will be able to readily determine a sufficient or effective amount of coagent without undue calculation or experimentation. In preferred embodiments, the amount of coagent employed is similar in terms of moles to the number of moles of curative employed. The amount of coagent may also be expressed as weight per 100 parts by weight rubber. For example, where the triallylcyanurate coagent is employed, it is preferably employed in an amount from about 0.25 phr to about 30 phr, and more preferably from about 0.5 phr to about 10 phr, based on 100 parts by weight rubber.

Generally, from about 5 to about 300 parts by weight, preferably from about 30 to about 250 parts by weight, and more preferably from about 70 to about 200 parts by weight, of extender oil per 100 parts rubber is added. The quantity of extender oil added depends upon the properties desired, with the upper limit depending upon the compatibility of the particular oil and blend ingredients; this limit is exceeded when excessive exuding of extender oil occurs. The amount of extender oil depends, at least in part, upon the type of rubber. High viscosity rubbers are more highly oil extendable. Where ester plasticizers are employed, they are generally used in amounts less than about 250 parts, and preferably less than about 175 parts, per 100 parts rubber.

When employed, the thermoplastic elastomers include from about 0 to about 300 parts by weight, preferably from about 20 to about 200 parts by weight, and more preferably from about 30 to about 100 parts by weight of a conventional thermoplastic resin per 100 parts by weight rubber.

When employed, the polymeric processing additives include from about o to about 20 parts by weight, preferably from about 1 to about 10 parts by weight, and more preferably from about 2 to about 6 parts by weight of a polymeric processing additive per 100 parts by weight rubber.

Fillers, such as carbon black or clay, may be added in amount from about 10 to about 250, per 100 parts by weight of rubber. The amount of carbon black that can be used depends, at least in part, upon the type of carbon black and the amount of extender oil that is used.

Preferably, the rubber is crosslinked by dynamic vulcanization. The term dynamic vulcanization refers to a vulcanization or curing process for a rubber contained in a blend with a thermoplastic resin, wherein the rubber is vulcanized under conditions of high shear at a temperature above the melting point of the thermoplastic. In one embodiment, the rubber is thus simultaneously crosslinked and dispersed as fine particles within the thermoplastic matrix, although other morphologies may also exist. Dynamic vulcanization is effected by mixing the thermoplastic elastomer components at elevated temperature in conventional mixing equipment such as roll mills, Banbury mixers, Brabender mixers, continuous mixers, mixing extruders and the like. One method for preparing thermoplastic vulcanizates is described in U.S. Patent No. 4,594,390, which is incorporated herein by reference, although methods employing low shear rates can also be used. Multiple step processes can also be employed whereby additional ingredients such as plastics, oils, and scavengers can be added after dynamic vulcanization has been achieved.

Despite the fact that the rubber may be partially or fully cured, the compositions of this invention can be processed and reprocessed by conventional plastic processing techniques such as extrusion, injection molding, blow molding, and compression molding. The rubber within these thermoplastic elastomers is usually in the form of finely-divided and well-dispersed particles of vulcanized or cured rubber within a continuous thermoplastic phase or matrix, although a co-continuous morphology or a phase inversion is also possible. In those embodiments where the cured rubber is in the form of finely-divided and well-dispersed particles within the thermoplastic medium, the rubber particles typically have an average diameter that is less than 50 $\mu$m, preferably less than 30 $\mu$m, even more preferably less than 10 $\mu$m, still more preferably less than 5 $\mu$m and even more preferably less than 1 $\mu$m. In preferred embodiments, at least 50%, more preferably at least 60%, and even more preferably at least 75% of the particles have an average diameter of less than 5 $\mu$m, more preferably less than 2 $\mu$m, and even more preferably less than 1 $\mu$m.

In one embodiment, the rubber is advantageously completely or fully cured. The degree of cure can be measured by determining the amount of rubber that is extractable from the thermoplastic vulcanizate by using cyclohexane or boiling xylene as an extractant. These methods are disclosed in U.S. Pat. No. 4,311,628. Preferably, the rubber has a degree of cure where less than 15 weight percent, more preferably less than 10 weight percent, even more preferably less than 5 weight percent, and still more preferably less than 3 weight percent of the rubber is extractable by cyclohexane at 23°C as described in U.S Patent Nos. 5,100,947 and 5,151,081, which are incorporated herein by reference. Alternatively, the rubber has a degree of cure such that the crosslink density is preferably at least $4 \times 10^{-5}$, more preferably at least $7 \times 10^{-5}$, and still more preferably at least $10 \times 10^{-5}$ moles per milliliter of rubber. See also "Crosslink Densities and Phase Morphologies in Dynamically Vulcanized TPEs," by Ellul et al., RUBBER CHEMISTRY AND TECHNOLOGY, Vol. 68, pp. 573-584 (1995).

The thermoplastic elastomers of this invention are useful for making a variety of articles such as weather seals, hoses, belts, gaskets, moldings, boots, elastic fibers and like articles. They are particularly useful for making articles by blow molding, extrusion, injection molding, thermo-forming, elasto-welding and compression molding techniques. More specifically, they are useful for making vehicle parts such as weather seals, brake parts such as cups, coupling disks, and diaphragm cups, boots such as constant velocity joints and rack and pinion joints, tubing, sealing gaskets, parts of hydraulically or pneumatically operated apparatus, o-rings, pistons, valves, valve seats, valve guides, and other elastomeric polymer based parts or elastomeric polymers combined with other materials such as metal/plastic combination materials. Also contemplated are transmission belts including V-belts, toothed belts with truncated ribs containing fabric faced V's, ground short fiber reinforced V's or molded gum with short fiber flocked V's.

In order to demonstrate the practice of the present invention, the following examples have been prepared and tested. The examples should not, however, be viewed as limiting the scope of the invention. The claims will serve to define the invention.

**EXAMPLES**

**Samples 1-10**

Ten thermoplastic vulcanizates were prepared by dynamically vulcanizing an elastomeric copolymer in the presence of various thermoplastic polymers by using a peroxide cure system. The characteristics of these thermoplastic polymers are set forth in Table I.

## TABLE I

| | MFR (dg/min) | Comonomer | Mole % Comonomer | Wt % Comonomer | $M_w$ (g/mol) | $M_n$ (g/mol) | $M_w/M_n$ | $T_m$ C° | $T_c$ C° | R |
|---|---|---|---|---|---|---|---|---|---|---|
| Polypropylene Homopolymer (ZN) | 0.7 | none | 0 | 0 | 552,980 | 143,560 | 3.9 | 168 | 110 | 1.9 |
| Propylene Copolymer I | 0.1 | MOD | 0.023 | 0.067 | n/a | n/a | n/a | 152 | 111 | --- |
| Propylene Copolymer II | 1.0 | MOD | 1.1 | 3.3 | 420,000 | 152,000 | 2.8 | 132 | 92 | 1.0 |
| Propylene Copolymer III | 0.7 | 4-MP1 | 0.3 | 0.6 | 489,000 | 198,000 | 2.5 | 148 | 108 | 0.5 |
| Propylene Copolymer IV | 9.2 | 4-MP1 | 1.7 | 3.4 | 251,000 | 103,000 | 2.4 | 132 | 96 | 0.7 |
| Propylene Copolymer V | --- | MOD | 0.6 | 1.8 | 476,000 | 182,000 | 2.6 | 140 | 100 | 0.3 |
| Metallocene Polypropylene Homopolymer | --- | none | 0 | 0 | 674,000 | 260,000 | 2.6 | 151 | 109 | 0.5 |
| Impact Copolymer | 4 | ethylene | -- | 9.5 | 258,000 | 77,000 | 3.4 | 165 | 113 | 8.8 |
| Random Copolymer I | 2 | ethylene | -- | 2 | 389,000 | 68,000 | 5.8 | 149 | 100 | 2.9 |
| Random Copolymer II | 3 | ethylene | -- | 4 | 232,000 | 70,000 | 3.3 | 141 | 96 | 4.3 |
| Long Chain Branched Polypropylene | 4.8 | ∀-T diene | --- | 0.03 | 237,068 | 62,935 | 3.8 | 152 | 108 | --- |
| Propylene Copolymer VI (ZN) | --- | MOD | 0.07 | 0.2 | 376,000 | 91,000 | 4.1 | 162 | 110 | 2.7 |
| Propylene Copolymer VII(ZN) | --- | MOD | 0.17 | 0.5 | 422,000 | 100,000 | 4.2 | 159 | 110 | 2.4 |
| Propylene Copolymer VIII(ZN) | --- | 4-MP1 | 0.1 | 0.2 | 342,000 | 85,000 | 4.0 | 162 | 112 | 1.4 |

The comonomers employed in preparing the propylene copolymers set forth in Table I include ethylene ($C_2$),

7-methyl-1,6-octadiene (MOD), and 4-methyl-pentene-1 (4-MP1). The polypropylene homopolymer was obtained under the tradename EQUISTAR™ 51S07A, which is a polymer prepared by Ziegler Natta-type synthesis; the impact copolymer was obtained under the tradename ExxonMobil™ 7032 (ExxonMobil); Random Copolymer I was obtained under the tradename ExxonMobil™ PP9122 (ExxonMobil); and Random Copolymer II was obtained under the tradename Exxon-Mobil™ PP9302E1 (ExxonMobil). The metallocene polypropylene homopolymer was prepared according to techniques described in U.S. Patent No. 6,583,227 B2, which is incorporated herein by reference. The propylene copolymers that included 7-methyl-1,6-octadiene (MOD) were prepared by employing a metallocene catalyst as set forth in co-pending Application Nos. 60/442,718 and 60/431,088. The propylene copolymers that included 4-methyl-pentene-1 (4-MP1) were prepared by employing a silyl-bridged metallocene catalyst as set forth above. Those polymers prepared by using Ziegler Natta polymerization methods are designated with the abbreviation ZN within Table I.

Molecular weight of the copolymers was determined using a Waters 150C high temperature GPC instrument. Melting and crystallization parameters were measured using DuPont DSC 912 with thin molded film samples scanning at 10°C/min and obtained from the second melt. Melt flow rate was determined according to ASTM D-1238. The crystallization distribution parameter R was calculated from the formulas $T_n = C_i/(C_i/T_i)$, $T_w = C_i \times T_i/(C_i)$, and $R = 100 \times (T_w/T_n - 1)$. Specifically, a commercial CRYSTAF, model 200 (PolymerChar S.A.) was used for the chemical composition distribution (CCD) analysis. Approximately 20 - 30 mg of polymer were placed in each reactor and dissolved in 30 ml 1,2 dichlorobenzene (ODCB, Aldrich 99+% stabilized with 0.5g BHT/4L) at 170°C for 60 minutes followed by 45 minutes equilibration time at 100°C. The polymer solutions were cooled to 30°C using a crystallization rate of 0.2 K/min. A two wavelength infra red detector was used to measure the polymer concentration during crystallization (3.5 $\mu$m, 2853 cm$^{-1}$ sym. stretch) and to compensate for base line drifts (3.6 $\mu$m) during the analysis time. The solution concentration was monitored at certain temperature intervals, yielding a cumulative concentration curve. The derivative of this curve with respect to temperature represents the weight fraction of crystallized polymer at each temperature. Melting and crystallization parameters were measured using TA instrument DSC 2920 with the heating an cooling rate of 10°C/min, and the reported melting temperatures were obtained from the second melt for the CRYSTAF tests.

Table I also includes data that characterizes propylene copolymers that were prepared using a coordination catalyst system (i.e., a Ziegler-Natta catalyst system). These are included for comparison to those propylene copolymers prepared by using a single-site catalyst system. In particular, the data in Table I demonstrates that the compositional distribution of the comonomer within the copolymers prepared by a Ziegler Natta coordination polymerization system is broader than those prepared by the single-site system as suggested by the higher values for the crystallization temperature distribution parameter R. It is noted that Propylene Copolymer VIII (ZN) showed an R of 1.4, which is probably a result of the very low comonomer content (which is below the 0.5 mole percent 4-MP1 of the present invention.

The following ingredients were used in each sample and processed by using the procedures generally set forth in U.S. Patent No. 4,594,390. The ingredients included 100 parts by weight of elastomeric copolymer (this amount refers only to the rubber component even though the stock included 100 parts by weight rubber and 75 parts by weight oil), 50 parts by weight thermoplastic polymer, 105 total parts by weight paraffinic oil (105 parts including the 75 parts inclusive with the rubber) (Example 7 including a total of 130 parts), 42 parts by weight clay, 6.6 parts by weight peroxide, 6.6 parts by weight coagent (50% active), and 1 part by weight antioxidant, each based on 100 parts by weight of the elastomeric copolymer. The elastomeric copolymer was poly(ethylene-*co*-propylene-*co*-ethylene norbornene) obtained under the tradename VISTALON™ 3666 (ExxonMobil), the peroxide was 4,4-bis(tert-butyl peroxy) diisopropyl benzene (60% active) obtained under the tradename ELASTOFLUX™ EF (Rhein Chemie), the coagent was triallylcyanurate obtained under the tradename PLC(TAC)-50BC (Rhein Chemie), and the antioxidant was tetrakis(methylene 3,5-ditert-butyl-4 hydroxy hydrocinnamate)methane obtained under the tradename IRGANOX™ 1010 (Ciba Geigy). Also provided in Table II are the results of various tests that were conducted on the samples following dynamic vulcanization. The amounts provided in Table II, as well as the other tables in this specification, are provided in parts by weight per 100 parts by weight rubber (phr) unless otherwise specified. The thermoplastic vulcanizates that are comparative samples have been designated with the letter "C" and those that are within the invention have been labeled with the letter "I."

**TABLE II**

| Sample | 1 | 2 | 3 | 4 | 5 | 6 | 7 | 8 | 9 | 10 |
|---|---|---|---|---|---|---|---|---|---|---|
| Comparative/Inventive | C | C | C | I | C | I | C | C | C | C |
| Paraffinic Oil | 105 | 105 | 105 | 105 | 105 | 105 | 130 | 105 | 105 | 105 |
| Polypropylene Homopolymer | 50 | --- | --- | --- | --- | --- | 50 | 50 | --- | --- |
| Propylene Copolymer I | --- | --- | 50 | --- | --- | --- | --- | --- | --- | --- |
| Propylene Copolymer II | --- | --- | --- | 50 | 50 | --- | --- | --- | --- | --- |
| Propylene Copolymer III | --- | --- | --- | --- | --- | 50 | --- | --- | --- | --- |
| Propylene Copolymer IV | --- | --- | --- | --- | --- | --- | --- | --- | --- | --- |
| Impact Copolymer | --- | 50 | --- | --- | --- | --- | --- | --- | --- | --- |
| Random Copolymer I | --- | --- | --- | --- | --- | --- | --- | --- | 50 | --- |
| Random Copolymer II | --- | --- | --- | --- | --- | --- | --- | --- | --- | 50 |
| **Properties** | | | | | | | | | | |
| Hardness (Shore A) | 70 | 67 | 70 | 67 | 66 | 66 | 63 | 69 | 65 | 63 |
| Specific Gravity | 0.980 | 0.979 | 0.978 | 0.984 | 0.988 | 0.977 | 0.967 | 0.981 | 0.978 | 0.974 |
| Ultimate Tensile Strength (MPa) | 7.3 | 4.7 | 6.3 | 9.2 | 5.5 | 7.1 | 5.2 | 6.1 | 5.4 | 5.4 |
| Ultimate Elongation (%) | 326 | 263 | 365 | 307 | 322 | 300 | 276 | 340 | 353 | 328 |
| 100% Modulus (MPa) | 3.8 | 3.0 | 3.3 | 4.1 | 3.1 | 3.5 | 2.9 | 3.2 | 2.9 | 2.9 |
| Weight Gain(%), 24 h @ 121°C | 110 | 145 | 150 | 226 | 212 | 174 | 103 | 113 | 214 | 217 |
| Tension Set @ 24°C (%) | 9.0 | 8.5 | 10.0 | 8.0 | 10.0 | 6.0 | 7.0 | 8.0 | 10.0 | 8.0 |
| **Capillary Viscosity** | | | | | | | | | | |
| 204°C, 30:1, rate 1/s, 1200, Pa s | 95.2 | 112.7 | 57.0 | 191.0 | 119.9 | 142.3 | 89.6 | 105.4 | 105.4 | 114.4 |
| Die Swell (%) | 5-10 | 9-16 | 1-9 | 18-27 | 13-18 | 16-23 | 10-16 | 11-16 | 10-16 | 10-16 |
| 204°C, 30:1, rate 1/s, 1200, Pa s | 97.7 | 119.1 | 57.7 | 211.0 | 120.8 | 139.9 | 86.5 | 102.3 | 101.3 | 110.2 |
| Die Swell (%) | 5-10 | 13-15 | 1-9 | 14-30 | 12-18 | 14-20 | 7-15 | 8-13 | 10-13 | 7-13 |
| 204°C, 30:1, rate 1/s, 1200, Pa s | --- | 121.5 | 57.8 | 211.5 | 119.1 | 139.8 | 87.7 | 103.7 | 89.7 | 108.6 |
| Die Swell (%) | --- | 12-17 | 3-7 | 2-28 | 12-17 | 16-20 | 8-16 | 9-15 | 7-13 | 6-14 |
| Mixing Torque @ Dump | --- | 58 | 27 | 89 | 57 | 70 | 44 | 53 | 50 | 57 |

Shore hardness was determined according to ASTM D-2240. Ultimate tensile strength, ultimate elongation, and 100% modulus were determined according to ASTM D-412 at 23EC by using an Instron testing machine. Weight gain was determined according to ASTM D-471. Tension set was determined according to ASTM D-142. Specific gravity was determined according to ASTM D 792. Capillary viscosity was determined with a Dynisco™ Capillary rheometer at 30:1 L/D at 1200 S$^{-1}$.

Samples 4 and 6 demonstrate the benefits of the invention in that these thermoplastic vulcanizates have a better overall balance of properties as compared to the comparative samples. In particular, the data suggests that the peroxide curative had less of a deleterious impact on Samples 4 and 6 than on the comparative samples as indicated by the relatively high mixing torque values and the relatively high capillary viscosity.

**Samples 11-25**

Fourteen additional thermoplastic vulcanizates were prepared by employing ingredients and procedures similar to samples 1-10 except an antioxidant was not added to the samples. Also, Sample 17 employed 130 parts by weight oil. The type of thermoplastic polymer employed and the resulting properties are set forth in Table III.

## TABLE III

| Sample | 11 | 12 | 13 | 14 | 15 | 16 | 17 | 18 |
|---|---|---|---|---|---|---|---|---|
| Comparative/Inventive | C | C | C | I | C | I | C | C |
| Paraffinic Oil | 105 | 105 | 105 | 105 | 105 | 105 | 130 | 105 |
| Polypropylene Homopolymer | 50 | --- | --- | --- | --- | --- | 50 | 50 |
| Propylene Copolymer I | --- | --- | 50 | --- | --- | --- | --- | --- |
| Propylene Copolymer II | --- | --- | --- | 50 | --- | --- | --- | --- |
| Propylene Copolymer III | --- | --- | --- | --- | 50 | --- | --- | --- |
| Propylene Copolymer IV | --- | --- | --- | --- | --- | 50 | --- | --- |
| Propylene Copolymer V | --- | --- | --- | --- | --- | --- | --- | --- |
| Metallocene Polypropylene Homopolymer | --- | --- | --- | --- | --- | --- | --- | --- |
| Impact Copolymer | --- | 50 | --- | --- | --- | --- | --- | --- |
| Random Copolymer I | --- | --- | --- | --- | --- | --- | --- | --- |
| Random Copolymer II | --- | --- | --- | --- | --- | --- | --- | --- |
| **Properties** | | | | | | | | |
| Hardness (Shore A) | 69 | 66 | 70 | 67 | 67 | 67 | 66 | 69 |
| Specific Gravity | 0.972 | 0.978 | 0.977 | 0.982 | 0.986 | 0.978 | 0.969 | 0.982 |
| Ultimate Tensile Strength (MPa) | 7.3 | 4.9 | 7.0 | 8.3 | 5.0 | 5.8 | 5.8 | 6.6 |
| Ultimate Elongation (%) | 315 | 210 | 322 | 286 | 191 | 363 | 289 | 294 |
| 100% Modulus (MPa) | 3.9 | 3.4 | 3.7 | 4.0 | 3.6 | 3.3 | 3.2 | 3.7 |
| Weight Gain(%), 24 h @ 121°C | 95 | 123 | 134 | 248 | 178 | 235 | 94 | 96 |
| Weight Gain(%), 24 h @ 100°C | 76 | 99 | 85 | 120 | 101 | 135 | 78 | 79 |
| Weight Gain(%), 24 h @ 70°C | 68 | 85 | 70 | 74 | 86 | 87 | 69 | 69 |
| Tension Set @ 24°C (%) | 8.0 | 7.5 | 8.0 | 9.5 | 9.0 | 11.0 | 7.0 | 8.0 |
| **Capillary Viscosity** | | | | | | | | |
| 204°C, 30:1, rate 1/s, 1200, Pa s | 79.4 | 110.2 | 65.2 | 170.3 | 119.8 | 99.7 | 69.7 | 87.2 |
| Die Swell (%) | 9-22 | 13-22 | 7-18 | 27-33 | 21-31 | 11-19 | 9-18 | 12-17 |
| 204°C, 30:1, rate 1/s, 1200, Pa s | 79.6 | 112.2 | 66.1 | 157.8 | 118.1 | 100.9 | 69.0 | 86.7 |
| Die Swell (%) | 8-20 | 4-21 | 7-17 | 14-33 | 26-34 | 14-20 | 9-19 | 12-15 |
| Mixing Torque @ Dump | 48 | 67 | 37 | 93 | 63 | 41 | 37 | 49 |

**TABLE III CONTINUED**

EP 1 634 919 A1

| Sample | 19 | 20 | 21 | 22 | 23 | 24 | 25 |
|---|---|---|---|---|---|---|---|
| Comparative/Inventive | C | C | I | I | C | C | I |
| Paraffinic Oil | 105 | 105 | 105 | 105 | 105 | 105 | 105 |
| Polypropylene Homopolymer | --- | --- | --- | --- | 50 | --- | --- |
| Propylene Copolymer I | --- | --- | --- | --- | --- | --- | --- |
| Propylene Copolymer II | --- | --- | 50 | --- | --- | --- | --- |
| Propylene Copolymer III | --- | --- | --- | --- | --- | --- | --- |
| Propylene Copolymer IV | --- | --- | --- | 50 | --- | --- | --- |
| Propylene Copolymer V | --- | --- | --- | --- | --- | 50 | 50 |
| Metallocene Polypropylene Homopolymer | --- | --- | --- | --- | --- | --- | --- |
| Impact Copolymer | --- | --- | --- | --- | --- | --- | --- |
| Random Copolymer I | 50 | --- | --- | --- | --- | --- | --- |
| Random Copolymer II | --- | 50 | --- | --- | --- | --- | --- |
| **Properties** | | | | | | | |
| Hardness (Shore A) | 66 | 65 | 69 | 68 | 69 | 66 | 68 |
| Specific Gravity | 0.979 | 0.975 | 0.981 | 0.978 | 0.975 | 0.972 | 0.979 |
| Ultimate Tensile Strength (MPa) | 6.6 | 6.3 | 9.1 | 5.3 | 6.14 | 6.59 | 7.40 |
| Ultimate Elongation (%) | 317 | 358 | 283 | 380 | 269 | 268 | 259 |
| 100% Modulus (MPa) | 3.5 | 3.2 | 4.4 | 2.9 | 3.44 | 3.29 | 3.60 |
| Weight Gain(%), 24 h @ 121°C | 163 | 215 | 236 | 233 | 103 | 132 | 211 |
| Weight Gain(%), 24 h @ 100°C | 95 | 126 | 124 | 142 | 93 | 108 | 139 |
| Weight Gain(%), 24 h @ 70°C | 78 | 92 | 74 | 88 | 82 | 83 | 81 |
| Tension Set @ 24°C (%) | 8.5 | 9.5 | 9.0 | 11.0 | 9.0 | 6.0 | 8.0 |
| **Capillary Viscosity** | | | | | | | |
| 204°C, 30:1, rate 1/s, 1200, Pa s | 85.7 | 101.6 | 185.0 | 99.7 | 84.0 | 117.8 | 159.9 |
| Die Swell (%) | 7-19 | 10-18 | 26-30 | 11-23 | 5-8 | 8-14 | 15-24 |
| 204°C, 30:1, rate 1/s, 1200, Pa s | 86.2 | 104.1 | 202.3 | 100.1 | 82.4 | 117.1 | 158.8 |
| Die Swell (%) | 7-20 | 13-20 | 23-36 | 4-23 | 4-9 | 8-17 | 9-22 |
| Mixing Torque @ Dump | 48 | 54 | 88 | 45 | 36 | 81 | --- |

As with Sample 4, Samples 14 and 21, which include propylene polymers having an α, internal non-conjugated diene comonomer, demonstrated an overall advantageous balance of properties in view of the comparative samples; the relatively high capillary viscosity in mixing torque suggests less propylene degradation by the peroxide. It is noted that these are particularly advantageous properties in view of the fact that these samples do not include an antioxidant as in Samples 1-10. Samples 16 and 22 are likewise believed to be advantageous in view of the comparative samples. These particular samples employed the propylene copolymer that included comonomer deriving from olefin having a labile hydrogen. The relatively comparable capillary viscosity and mixing torque suggests some propylene degradation; and the absence of the antioxidant is likely the cause for the distinction between Sample 6. Despite this limited propylene degradation, relatively high mechanical properties, particularly the ultimate elongation, suggests that the propylene degradation was primarily limited to the labile hydrogen and therefore did not deleteriously impact the overall integrity of the copolymer.

**Samples 26-48**

Twenty-two additional thermoplastic vulcanizates were prepared by employing ingredients and procedures similar to Samples 1-10. Each sample included three parts by weight antioxidant per 100 parts by weight of the elastomeric copolymer. As with the previous samples, various thermoplastic resins were employed. In addition to those thermoplastic resins employed above, a long-chain branched polypropylene, characterized by having an MFR of about 6 dg/min., was employed in Sample 47. This long-chain branched polypropylene, characterized by having an MFR of about 5 dg/min. and 1,9-decadiene comonomer, is similar to that described in U.S. Patent No. 6,433,090, which is incorporated herein by reference, and additional characterization is provided in Table I. A distinct elastomeric copolymer was employed in most samples. Namely, Elastomeric Copolymer II was a poly(ethylene-co-propylene-co-vinyl norbornene) characterized by having a diene content of about 3 weight percent, a Mooney viscosity of about 63 (oil extended), an ethylene content of about 63 weight percent, and an oil content of 100 phr, although as described above, the parts by weight rubber in Table IV simply refers to the amount of rubber even though the rubber stock included an oil. The oil that was included with the rubber has been accounted for with reference to the oil. Sample 48 employed both a propylene copolymer as well as a conventional thermoplastic resin.

**TABLE IV**

| Samples | 26 | 27 | 28 | 29 | 30 | 31 | 32 | 33 | 34 | 35 | 36 | 37 |
|---|---|---|---|---|---|---|---|---|---|---|---|---|
| Comparative/Inventive | C | C | C | C | C | C | I | I | I | I | I | C |
| Paraffinic Oil | 105 | 105 | 105 | 105 | 105 | 105 | 105 | 105 | 105 | 105 | 105 | 105 |
| Elastomeric Copolymer I | --- | --- | --- | --- | --- | --- | --- | --- | --- | --- | --- | --- |
| Elastomeric Copolymer II | 100 | 100 | 100 | 100 | 100 | 100 | 100 | 100 | 100 | 100 | 100 | 100 |
| Polypropylene Homopolymer | 50 | 50 | 50 | 50 | --- | --- | --- | --- | --- | --- | --- | --- |
| Propylene Copolymer I | --- | --- | --- | --- | 50 | 50 | --- | --- | --- | --- | --- | --- |
| Propylene Copolymer II | --- | --- | --- | --- | --- | --- | 50 | 50 | 50 | 50 | 50 | --- |
| Propylene Copolymer III | --- | --- | --- | --- | --- | --- | --- | --- | --- | --- | --- | 50 |
| Propylene Copolymer IV | --- | --- | --- | --- | --- | --- | --- | --- | --- | --- | --- | --- |
| Random Copolymer I | --- | --- | --- | --- | --- | --- | --- | --- | --- | --- | --- | --- |
| Random Copolymer II | --- | --- | --- | --- | --- | --- | --- | --- | --- | --- | --- | --- |
| Long Chain Branched Polypropylene | --- | --- | --- | --- | --- | --- | --- | --- | --- | --- | --- | --- |
| Peroxide | 3.30 | 6.60 | 3.30 | 6.60 | 3.30 | 6.60 | 3.30 | 6.60 | 3.30 | 6.60 | 6.60 | 3.30 |
| Coagent | 0.00 | 0.00 | 3.30 | 6.60 | 3.30 | 6.60 | 3.30 | 6.60 | 0.00 | 0.00 | 0.00 | 3.30 |
| **Properties** | | | | | | | | | | | | |
| Hardness (Shore A) | 64.4 | 67.6 | 67.4 | 69.5 | 68.2 | 70.8 | 64.2 | 67.3 | 63.9 | 64.7 | 65.3 | 66.1 |
| Specific Gravity | 0.969 | 0.969 | 0.975 | 0.976 | 0.972 | 0.974 | 0.971 | 0.980 | 0.968 | 0.966 | 0.976 | 0.972 |
| Ultimate Tensile Strength (MPa) | 5.47 | 5.94 | 6.04 | 5.63 | 5.20 | 5.70 | 6.30 | 6.62 | 6.35 | 6.50 | 4.63 | 6.67 |
| Ultimate Elongation (%) | 319 | 262 | 269 | 176 | 242 | 158 | 287 | 197 | 331 | 259 | 226 | 305 |
| 100% Modulus (MPa) | 3.62 | .311 | 3.32 | 3.90 | 3.10 | 4.32 | 2.86 | 3.73 | 2.71 | 3.20 | 2.86 | 3.27 |
| Weight Gain(%), 24 h @ 121°C | 119 | 100 | 105 | 89 | 133 | 116 | 234 | 181 | 246 | 230 | 221 | 174 |
| Weight Gain(%), 24 h @ 100°C | 113 | 96 | 87 | 81 | 112 | 95 | 165 | 131 | 176 | 168 | 158 | 136 |
| Weight Gain(%), 24 h @ 70°C | 96 | 80 | 84 | 69 | 85 | 69 | 87 | 76 | 98 | 90 | 85 | 86 |
| Tension Set @ 24°C (%) | 10.0 | 8.0 | 8.5 | 6.0 | 9.0 | 8.0 | 10.0 | 7.0 | 11.0 | 10.0 | 9.0 | 10.0 |
| **Capillary Viscosity** | | | | | | | | | | | | |
| 204°C, 30:1, rate 1/s, 1200, Pa s | 96.2 | 89.7 | 99.9 | 100.1 | 87.9 | 86.4 | 132.7 | 156.8 | 137.2 | 148.5 | 142.8 | 107.4 |
| Die Swell (%) | 12-19 | 6-14 | 10-19 | 6-13 | 5-16 | 4-10 | 17-25 | 11-20 | 13-24 | 18-26 | 18-26 | 13-18 |
| 204°C, 30:1, rate 1/s, 1200, Pa s | 97.5 | 89.1 | 100.8 | 100.5 | 88.4 | 86.7 | 134.8 | 159.4 | 139.4 | 147.6 | 146.1 | 108.5 |
| Die Swell (%) | 13-17 | 6-13 | 12-17 | 6-13 | 6-16 | 5-11 | 14-24 | 9-23 | 14-26 | 14-25 | 16-26 | 10-16 |

**TABLE IV**

| Samples | 38 | 39 | 40 | 41 | 42 | 43 | 44 | 45 | 46 | 47 | 48 |
|---|---|---|---|---|---|---|---|---|---|---|---|
| Comparative/Inventive | C | I | I | I | I | C | C | C | C | C | I |
| Paraffinic Oil | 105 | 105 | 105 | 105 | 105 | 105 | 105 | 105 | 105 | 105 | 105 |
| Elastomeric Copolymer I | --- | --- | --- | --- | --- | --- | --- | --- | --- | 100 | 100 |
| Elastomeric Copolymer II | 100 | 100 | 100 | 100 | 100 | 100 | 100 | 100 | 100 | --- | --- |
| Polypropylene Homopolymer | --- | --- | --- | --- | --- | --- | --- | --- | --- | --- | 30 |
| Propylene Copolymer I | --- | --- | --- | --- | --- | --- | --- | --- | --- | --- | --- |
| Propylene Copolymer II | --- | --- | --- | --- | --- | --- | --- | --- | --- | --- | --- |
| Propylene Copolymer III | 50 | --- | --- | --- | --- | --- | --- | --- | --- | --- | --- |
| Propylene Copolymer IV | --- | 50 | 50 | 50 | 50 | --- | --- | --- | --- | --- | --- |
| Propylene Copolymer V | --- | --- | --- | --- | --- | --- | --- | --- | --- | --- | 20 |
| Random Copolymer I | --- | --- | --- | --- | --- | 50 | 50 | --- | --- | --- | --- |
| Random Copolymer II | --- | --- | --- | --- | --- | --- | --- | 50 | 50 | --- | --- |
| Long Chain Branched Polypropylene | --- | --- | --- | --- | --- | --- | --- | --- | --- | 50 | --- |
| Peroxide | 6.60 | 3.30 | 6.60 | 3.30 | 6.60 | 3.30 | 6.60 | 3.30 | 6.60 | 6.60 | 6.60 |
| Coagent | 6.60 | 3.30 | 6.60 | 0.00 | 0.00 | 3.30 | 6.60 | 3.30 | 6.60 | 6.60 | 6.60 |
| **Properties** | | | | | | | | | | | |
| Hardness (Shore A) | 67.5 | 61.3 | 65.8 | 62.5 | 64.6 | 64.6 | 65.5 | 60.2 | 64.9 | 65.9 | 68 |
| Specific Gravity | 0.978 | 0.978 | 0.967 | 0.967 | 0.964 | 0.973 | 0.978 | 0.975 | 0.975 | 0.984 | 0.979 |
| Ultimate Tensile Strength (MPa) | 5.70 | 4.68 | 5.44 | 5.19 | 5.70 | 5.54 | 5.26 | 3.78 | 4.74 | 7.56 | 5.92 |
| Ultimate Elongation (%) | 154 | 249 | 151 | 340 | 247 | 268 | 171 | 248 | 147 | 261 | 242 |
| 100% Modulus (MPa) | 4.29 | 2.62 | 3.89 | 2.41 | 2.98 | 2.84 | 3.61 | 2.94 | 3.48 | 3.85 | 3.38 |
| Weight Gain(%), 24 h @ 121°C | 151 | 230 | 159 | 215 | 192 | 192 | 161 | 203 | 160 | 155 | 128 |
| Weight Gain(%), 24 h @ 100°C | 117 | 172 | 119 | 163 | 144 | 145 | 122 | 157 | 124 | 118 | 103 |
| Weight Gain(%), 24 h @ 70°C | 67 | 108 | 76 | 106 | 88 | 90 | 76 | 106 | 82 | 75 | 80 |
| Tension Set @ 24°C (%) | 7.0 | 9.0 | 6.0 | 10.5 | 6.0 | 8.0 | 6.0 | 8.0 | 6.0 | 5.0 | 8.0 |
| **Capillary Viscosity** | | | | | | | | | | | |
| 204°C, 30:1, rate 1/s, 1200, Pa s | 113.1 | 103.3 | 155.3 | 111.9 | 118.3 | 100.2 | 102.1 | 114.0 | 121.9 | 129.7 | 108.5 |
| Die Swell (%) | 5-12 | 12-23 | 11-15 | 15-22 | 9-16 | 7-19 | 7-11 | 12-16 | 9-15 | 12-21 | 5-11 |
| 204°C, 30:1, rate 1/s, 1200, Pa s | 113.6 | 101.9 | 111.5 | 112.6 | 118.0 | 100.6 | 102.9 | 113.6 | 123.2 | 124.8 | 108.9 |
| Die Swell (%) | 5-14 | 10-25 | 9-14 | 14-20 | 7-12 | 10-15 | 5-10 | 11-18 | 9-14 | 10-21 | 5-11 |

EP 1 634 919 A1

The data in Table IV shows that the thermoplastic vulcanizates prepared with a propylene copolymer and the use of a poly(ethylene-*co*-propylene-*co*-vinyl norbornene) gave a better balance of overall properties, including cure state as indicated by weight gain, even as the level of peroxide that was used was decreased.

Various modifications and alterations that do not depart from the scope and spirit of this invention will become apparent to those skilled in the art. This invention is not to be duly limited to the illustrative embodiments set forth herein.

**Claims**

1. A composition comprising:

   a dynamically-vulcanized rubber; and
   a copolymer of propylene and at least one of (i) an $\alpha$, internal non-conjugated diene monomer and (ii) an olefin containing a labile hydrogen, where the copolymer includes from about 0.1 to about 10 mole percent by weight units deriving from $\alpha$, internal non-conjugated diene monomer or from about 0.5 to about 10 mole percent units deriving from an olefin containing a labile hydrogen, and where the compositional distribution of the $\alpha$, internal non-conjugated diene monomer or the olefin containing a labile hydrogen is narrow as determined by a crystallization temperature distribution parameter R that is less than 2.0.

2. The composition of claim 1, where said rubber is dynamically vulcanized with peroxide.

3. The composition of claim 1, where said copolymer is a copolymer of propylene, an $\alpha$, internal non-conjugated diene monomer, optionally ethylene, and optionally an $\alpha$, $\omega$ non-conjugated diene monomer.

4. The composition of claim 3, where said copolymer consists essentially of monomer units from propylene, an $\alpha$, internal non-conjugated diene monomer, optionally ethylene, and optionally an $\alpha$, $\omega$ non-conjugated diene monomer.

5. The composition of claim 3, where said copolymer includes from about 90 to about 99.9 mole percent by weight units deriving from propylene, from about 0.1 to about 10 mole percent by weight units deriving from $\alpha$, internal non-conjugated diene monomer, from about o to about 2.0 mole percent by weight units deriving from an $\alpha$, $\omega$ non-conjugated diene monomer, and from about o to about 3.0 mole percent deriving from ethylene.

6. The composition of claim 1, where said copolymer is a copolymer of propylene, an olefin containing a labile hydrogen, and optionally ethylene.

7. The composition of claim 6, where said copolymer includes from about 90 to about 99.5 mole percent units deriving from propylene, from about 0.5 to about 10 mole percent units deriving from an olefin containing a labile hydrogen, and from about o to about 3 mole percent units deriving from ethylene.

8. The composition of claim 1, where said $\alpha$, internal non-conjugated diene monomer includes 2-methyl-1,5-hexadiene, 7-methyl-1,6-octadiene, dicyclopentadiene, vinylnorbornene, ethylidiene norbornene, 4-vinylclohexene, 4-vinyl cyclopentene or mixtures thereof, and where said $\alpha$, $\omega$ non-conjugated diene monomer is 1,7-octadiene, 1,9-decadiene, 1,13-tetradecadiene, 1,8-nonadiene, 1,10-undecadiene, 1,11-dodecadiene, 1,15-hexadecadiene, 1,17-octadecadiene, norbornadiene, 4-butenyl styrene, 3-propenyl styrene, divinylbenzene, or mixtures thereof.

9. The composition of claim 1, where the composition further includes polypropylene homopolymer.

10. The composition of claim 1, where said olefin having a labile hydrogen includes 3-methyl-pentene-1, 4-methyl-pentene-1, p-methyl styrene, 3-methyl-butene-1, or mixtures thereof.

11. The composition of claim 1, where said copolymer of propylene is devoid of monomeric units deriving from conjugated dienes.

12. The composition of claim 1, where said dynamically-vulcanized rubber is cured to an extent where less than 5% by weight of the rubber is extractable by cyclohexane at 23°C.

13. A molded article or extrudate obtainable from the composition of any of claims 1 to 12.

**European Patent Office**

**EUROPEAN SEARCH REPORT**

Application Number

EP 05 10 8113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | WO 2005/028555 A (ADVANCED ELASTOMER SYSTEMS; ELLUL, MARIA; CHENG, JOHN) 31 March 2005 (2005-03-31) * abstract; claims 1-13 * * page 4, paragraph 14 * * page 8, paragraph 24 * * page 10, paragraph 30 * * page 15, paragraph 45 - paragraph 49 * ----- | 1 | C08L21/00 C08L23/14 |
| X | EP 0 401 993 A (MITSUBISHI PETROCHEMICAL COMPANY LIMITED) 12 December 1990 (1990-12-12) * abstract; claims 1-11 * * column 5, line 53 * * column 9, lines 1-6,27 * * column 11, line 15 - line 50 * * column 12, line 5 - line 16 * * column 15, line 45 - column 16, line 51 * * column 17, line 10 - line 25 * ----- | 1-13 | |
| D,X | US 5 656 693 A (ELLUL ET AL) 12 August 1997 (1997-08-12) * abstract; claims 1-22 * * column 4, line 13 - line 56 * * column 5, line 21 - line 29 * * column 8, line 35 - line 55 * * column 9, line 21 * ----- | 1,2,6,7, 10-13 | **TECHNICAL FIELDS SEARCHED (IPC)** C08L |

The present search report has been drawn up for all claims

| Place of search | Date of completion of the search | Examiner |
|---|---|---|
| The Hague | 16 November 2005 | Bergmans, K |

**ANNEX TO THE EUROPEAN SEARCH REPORT
ON EUROPEAN PATENT APPLICATION NO.**

EP 05 10 8113

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2005

| Patent document cited in search report | | Publication date | Patent family member(s) | | Publication date |
|---|---|---|---|---|---|
| WO 2005028555 | A | 31-03-2005 | NONE | | |
| EP 0401993 | A | 12-12-1990 | DE | 69006543 D1 | 24-03-1994 |
| | | | DE | 69006543 T2 | 26-05-1994 |
| | | | JP | 2311507 A | 27-12-1990 |
| | | | JP | 2738562 B2 | 08-04-1998 |
| | | | US | 4987193 A | 22-01-1991 |
| US 5656693 | A | 12-08-1997 | AU | 716677 B2 | 02-03-2000 |
| | | | AU | 6109596 A | 15-01-1997 |
| | | | BR | 9608988 A | 29-06-1999 |
| | | | CA | 2220668 A1 | 03-01-1997 |
| | | | CN | 1190420 A | 12-08-1998 |
| | | | DE | 69603737 D1 | 16-09-1999 |
| | | | DE | 69603737 T2 | 16-03-2000 |
| | | | EP | 0843698 A1 | 27-05-1998 |
| | | | ES | 2135904 T3 | 01-11-1999 |
| | | | JP | 11507696 T | 06-07-1999 |
| | | | WO | 9700288 A1 | 03-01-1997 |

EPO FORM P0459

For more details about this annex : see Official Journal of the European Patent Office, No. 12/82